# EUROPÄISCHE PATENTSCHRIFT

(11) **EP 2 606 346 B1**
(45) Veröffentlichungstag und Bekanntmachung des Hinweises auf die Patenterteilung: **25.10.2017**
(21) Anmeldenummer: 11738978.3
(22) Anmeldetag: 29.07.2011
(51) Int. Cl.: G01N 30/32, F04B 13/00, F04B 43/04, G01N 30/86

(54) **VORRICHTUNG ZUR DURCHFÜHRUNG VON CHROMATOGRAFIE MIT EINEM LÜFTERLOSEN DREHSTROM-SYNCHRON-SERVOMOTOR**
CHROMATOGRAPHY APPARATUS COMPRISING A DISPLACEMENT PUMP WITH A FAN-FREE THREE-PHASE CURRENT-SYNCHRON-SERVOMOTOR
APPAREIL POUR LA CHROMATOGRAPHIE COMPRENANT UN SERVOMOTEUR SYNCHRONE SANS VENTILATEUR ET À COURANT 3-PHASES

(30) Priorität: 17.08.2010 DE 102010034585
(43) Veröffentlichungstag der Anmeldung: 26.06.2013
(73) Patentinhaber: LEWA GmbH, 71229 Leonberg (DE)
(72) Erfinder: JOHL, Hans-Joachim, 71701 Schwieberdingen (DE); GAUDET, Gary, G., Sunrise, Florida 33323 (US); DÖRLING, Matthias, 73630 Grundbach (DE)
(74) Vertreter: Zeitler Volpert Kandlbinder Patent- und Rechtsanwälte Partnerschaft mbB
(86) Internationale Anmeldenummer: PCT/EP2011/003896
(87) Internationale Veröffentlichungsnummer: WO 2012/022437

(56) Entgegenhaltungen:
- EP-A2- 1 843 040
- GB-A- 2 156 445
- US-A- 4 422 942
- US-A1- 2002 134 143

## Beschreibung

Die Erfindung betrifft eine Vorrichtung zur Durchführung von Chromatographie, vorzugsweise von Flüssigkeits-Prozesschromatographie, insbesondere auf industriellem Gebiet, unter Verwendung jeweils wenigstens einer mit einem Antrieb versehenen Verdrängerpumpe zur Aufgabe von Produkt sowie Eluent (mobile Phase) in eine Trennsäule (stationäre Phase), gemäß dem Oberbegriff des Anspruchs 1.

Wie bekannt, stellt die Chromatographie ein Verfahren da, das die Auftrennung eines Stoffgemisches durch unterschiedliche Verteilung seiner Einzelbestandteile zwischen einer stationären und einer mobilen Phasen erlaubt.

Hierbei werden unterschiedliche Substanzen in der mobilen Phase auf einer stationären Phase befördert. Aufgrund der Wechselwirkungen zwischen der Probe, der stationären Phase und der mobilen Phase werden einzelne Substanzen unterschiedlich schnell weitertransportiert und somit voneinander getrennt.

Zur Durchführung der Chromatographie sind die Herstellung des Flusses der mobilen Phase, die Aufgabe der zu trennenden Probe, die eigentliche Trennung und die darauf folgende Detektion nötig. Das Fließen der mobilen Phase erfolgt hierbei üblicherweise mittels Druck, der durch eine Verdrängerpumpe erzeugt wird.

Die Chromatographie als Trenn- und Aufreinigungsverfahren von Wertstoffen ist neben dem Einsatz im analytischen Labor auch in den industriellen Prozessen etabliert. Während es hierbei zur Versorgung der Trennsäulen mit den erforderlichen Medien im Laborbereich eine ganze Reihe geeigneter Pumpenlösungen gibt, ist die Auswahl an Pumpenlösungen für den industriellen Prozess bedeutend kleiner. Auch hier müssen die zur Anwendung gelangenden Pumpensysteme, unter anderem wegen der Forderung nach Sterilität, z. B. bei biotechnologischen oder biopharmazentrischen Produkten, zum einen hermetisch abgeschlossen sein und sehr präzise arbeiten, da sie jederzeit eine reproduzierbare Menge an Produkten und Eluenten gegen ein sich aufgrund des Beladungszustandes der Säule ändernden Gegendrucks fördern sollen. Zum anderen fordern zunehmend große Durchsatzmengen im Bereich von mehreren Kubikmetern pro Stunde besondere Sorgfalt für die strömungstechnische Einbindung in das Gesamtsystem.

Es hat sich nun gezeigt, dass eine Tendenz besteht, von der diskontinuierlichen Pufferaufbereitung hin zur kontinuierlichen Herstellung zu gehen (z. B. Simulated Moving Bed-Technologie = SMB). Grund hierfür sind die immer größeren Verbrauchsmengen und die Vielfalt der Medien und Konzentrationen von Eluenten und Pufferlösungen, die bei einem herkömmlichen Batch-Prozess schnell zu einem unwirtschaftlichen Betrag führen. Demgemäß ist der kontinuierliche Betrieb deutlich effizienter.

Diese Betriebsart zeigt aber neue andere Probleme. Neben der volumen- und kostenintensiven Vorratshaltung für die diversen Medien und der Notwendigkeit eines vorausschauenden Planungsmanagements entfallen bei der kontinuierlichen Chromatographie auch die eine Sicherheit darstellende Vollanalyse sowie die Möglichkeit einer nachträglichen Korrektur. Demgemäß müssen die im kontinuierlichen Prozess erforderlichen Pumpen, Ventile, Mischeinrichtungen und Messgeräte zur Herstellung der mobilen Phase besonders zuverlässig, genau und steriltechnisch dauerhaft zuverlässig sein.

US 4 422 942 A (ALLINGTON ROBERT W, 27-12-1983) offenbart ein Verfahren zur Durchführung von Flüssigkeitschromatographie, wobei die Geschwindigkeit der Verdrängerpumpe in Abhängigkeit vom Druck am Eingang der Säule gesteuert wird. Es existiert daher das Streben, die Vorrichtung der gattungsgemäßen Art derart auszugestalten, dass sie ein komplettes Funktionsmodul mit allen prozessrelevanten

Anbauten zur Integration in Chromatographieanlagen darstellt und eine exakte, reproduzierbare Dosiergenauigkeit, große Stellbereiche sowie eine hohe Produktqualität aufweist bzw. gewährleistet.

Demgemäß liegt der Erfindung die Aufgabe zugrunde, die Vorrichtung der gattungsgemäßen Art derart auszugestalten, dass eine Verbesserung der Auftrennung einzelner Teilmengen sowie die Erhöhung der Genauigkeit des Trennverfahrens erreicht werden.

Die Merkmale der zur Lösung dieser Aufgabe geschaffenen Vorrichtung gemäß der Erfindung ergeben sich aus Anspruch 1. Vorteilhafte Ausgestaltungen hiervon sind in den weiteren Ansprüchen beschrieben.

Der Erfindung liegt der verblüffend einfache, jedoch sehr wirkungsvolle Gedanke zugrunde, als Antrieb jeder Verdrängerpumpe, die der Aufgabe von Produkt sowie Eluent (mobile Phase) in mindestens eine Trennsäule (stationäre Phase) dient, einen hochdynamischen Antrieb zu verwenden, mit dessen integriertem Gebersystem die aktuellen Weg-/Zeitdaten erfasst und über eine verbundene intelligente Bewegungssteuerung/-regelung in entsprechende lagegeregelte Fahrbefehle umgesetzt werden. Dadurch ist es erst möglich, die Verdrängerpumpe in einer Art und Weise anzutreiben, dass die sonst typische Druck- und Volumenpulsation merklich reduziert werden kann.

Über dieses Antriebssystem lassen sich in Verbindung mit Verdrängerpumpen sehr exakte Volumenströme in verschiedenen Betriebsmodi fahren, die zusätzlich auch an die anlagenspezifischen Gegebenheiten, wie Einbau von Armaturen durch spezielle Bewegungssteuerungen der Verdrängerpumpen angepasst werden können.

Das Antriebssystem jeder Verdrängerpumpe besteht aus einem Servomotor, und zwar aus einem permanenterregten Drehstrom-Synchron-Servomotor und einer zugehörigen Antriebsintelligenz mit entsprechender Bewegungssteuerung/-regelung, die in Form eines Programmcodes im Antrieb hinterlegt ist.

Als Verdrängerpumpe kann eine oszillierende Verdrängerpumpe, insbesondere eine Membranpumpe, vorzugsweise eine Dosiermembranpumpe, und/oder eine rotierende Verdrängerpumpe verwendet werden.

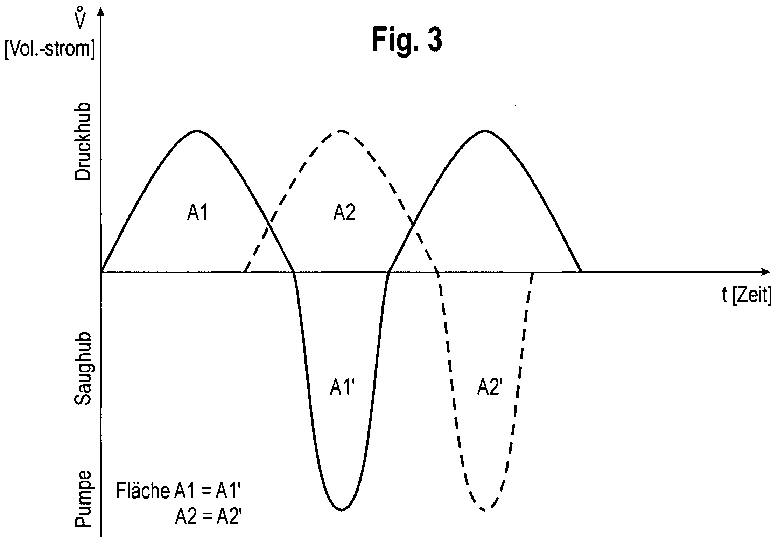

Besondere Vorteile ergeben sich, wenn die erfindungsgemäße Vorrichtung aus zwei Dosiermembranpumpen und o.g. Antriebssystem besteht und eine zugehörige Bewegungssteuerung/-Regelung derart ausgeführt ist, dass die Dosiermembranpumpen durch elektrische Synchronisation und variabler Winkelgeschwindigkeit in einem optimalen Verhältnis zueinander betrieben werden. Dieses optimale Verhältnis kann die zeitliche Zuordnung der Volumenstromhübe der einzelnen Pumpen zueinander darstellen, wie aus dem in Fig. 3 gezeigten Kurvendiagramm leicht ersichtlich.

Durch diese Form der Bewegungssteuerung kann ein resultierender Volumenstrom generiert werden, der beispielsweise die Volumenstrom- und Druckpulsation reduziert und dadurch erhebliche Vorteile z.B. in der Beschickung der Chromatographiesäulen mit sich bringt.

Durch die erfindungsgemäße Vorrichtung wird somit eine beträchtliche Verbesserung der Genauigkeit des Trennverfahrens erzielt, bei gleichzeitig erreichtem erweiterten dynamischen Stellbereich und garantierter Pulsationsarmut.

Aufgrund der exakten, reproduzierbaren Dosiergenauigkeit, der großen Stellbereiche und der hohen Produktqualität kann eine in der erfindungsgemäßen Weise ausgestattete Vorrichtung unter anderem in den folgenden Prozessen eingesetzt werden:
- industrielle Nieder- und Mitteldruckchromatographie im Bereich von 1l/h bis über 5000 l/h gegen 20 bar,
- Hochdruckchromatographie im Bereich von 1l/h bis über 5000 l/h gegen 350 bar und höher,
- kontinuierliche Verfahren.

Mit der erfindungsgemäßen Vorrichtung lassen sich zahlreiche Vorteile erzielen. So ermöglicht beispielsweise die Kombination "Variation der Drehzahl" und "Teilhubmodus" einen Stellbereich bis über 1:100. Während herkömmliche Technik dazu einen Frequenzumrichter und gegebenenfalls zusätzlich eine elektrische Hubverstellung benötigt, die über separate Leistungs- und Datenanschlüsse gespeist werden, benötigt die erfindungsgemäße Vorrichtung hierzu nur einen einzigen Anschluss. Außerdem lässt sich ein Gradient beim Fördern des Eluenten (mobile Phase) beliebig und hochpräzise einstellen, was sowohl bei der industriellen Niederdruckchromatographie als auch bei der Hochdruckchromatographie möglich ist. Schließlich ist mit der intelligenten Steuerung zweier Pumpen eine nahezu pulsationsfreie Förderung möglich.

Mit der erfindungsgemäßen Vorrichtung lassen sich im Übrigen die folgenden weiteren Vorteile erreichen:
- ein pulsationsarmer Fluss der Probe durch die Trennsäule,
- bei einer zu prüfenden naturgemäß hochempfindlichen Biomasse ergibt sich ein scherarmer Prozess, speziell aufgrund der Verwendung von Dosiermembranpumpen,
- auf Wunsch lässt sich ein konstanter Volumenstrom, sowohl bei isocratischer (gleichbleibender Konzentration) als auch stufenweise oder als Gradient ausgestalteter Fahrweise, unabhängig vom Gegendruck, erreichen,
- es ist nur ein geringes Totvolumen bis zur Trennsäule vorhanden ("Hold-up"), wodurch sich ein besserer Gradient, d. h. ein besserer Peak erreichen lässt. Hierdurch ergibt sich keine Rückvermischung, weil alle Teile kleiner gebaut werden können. Insgesamt ist damit ein kleineres Flüssigkeitsgesamtvolumen in der Anlage vorhanden, was aufgrund der drucksteifen Pumpenlinie die Verwendung kleinerer Leitungsquerschnitte und Komponenten ermöglicht und die Verwendung von ansonsten erforderlichen Pulsationsdämpfern vermeidet.
- der Stellbereich der Pumpe ist bis zu 1:150 und höher möglich, so dass sich hierdurch höhere Pufferkonzentrationen erreichen lassen,
- aufgrund der programmierten Steuerung ist ein vollautomatisiertes Verfahren möglich, wodurch Fehlbedienungen, beispielsweise aufgrund von bisher erforderlicher manueller Hubverstellung, ausgeschlossen werden,
- es lässt sich aufgrund des vollautomatisierten Verfahrens eine einwandfreie Dokumentation erstellen,
- es wird insgesamt eine bessere Ausbeute erzielt, was aufgrund der hohen Kosten der zu trennenden bereits werthohen Stoffe von besonderem Vorteil ist.

Vorzugsweise ermöglicht die erfindungsgemäße Vorrichtung eine pulsationsarme, gleichmäßige Verteilung bei der Aufgabe der Medien mittels der in einem optimalen Verhältnis zueinander betriebenen Verdrängerpumpen auf die Verteilerböden, die stationäre Phase schonende, für verbesserte Trennbedingungen insbesondere hinsichtlich der Chromatogrammqualität in der Trennsäule über die an den jeweiligen Trennprozess anpassbare Dosierstromverläufe und damit anpassbaren Fluidkinematiken (Isokratische-, Stufen- oder Gradientenfahrweise) der mobilen Phase durch Verdrängerpumpen und deren präzise Bewegungssteuerung/-regelung über entsprechende lagegeregelte Fahrbefehle.

Vorzugsweise stellen die Verdrängerpumpen und ihre Antriebe ein vollautomatisches, ohne fehlerbehaftete manuelle Pumpen-Hublängenverstellung und damit nach GMP (Good Manufacturing Practice) - Grundsätzen dokumentierbares Gesamtsystem dar.

Die Erfindung wird im Folgenden in Form von Ausführungsbeispielen anhand der Zeichnung näher erläutert. Diese zeigt in
- Fig. 1 schematisch den Aufbau einer erfindungsgemäßen Vorrichtung zur Durchführung der Flüssigkeits-Prozesschromatographie;
- Fig. 2 eine abgewandelte Ausführungsform hiervon; und
- Fig. 3 ein Kurvendiagramm, in welchem die Volumenströme von Saug- und Druckhub der Pumpe über der Zeit aufgetragen sind.

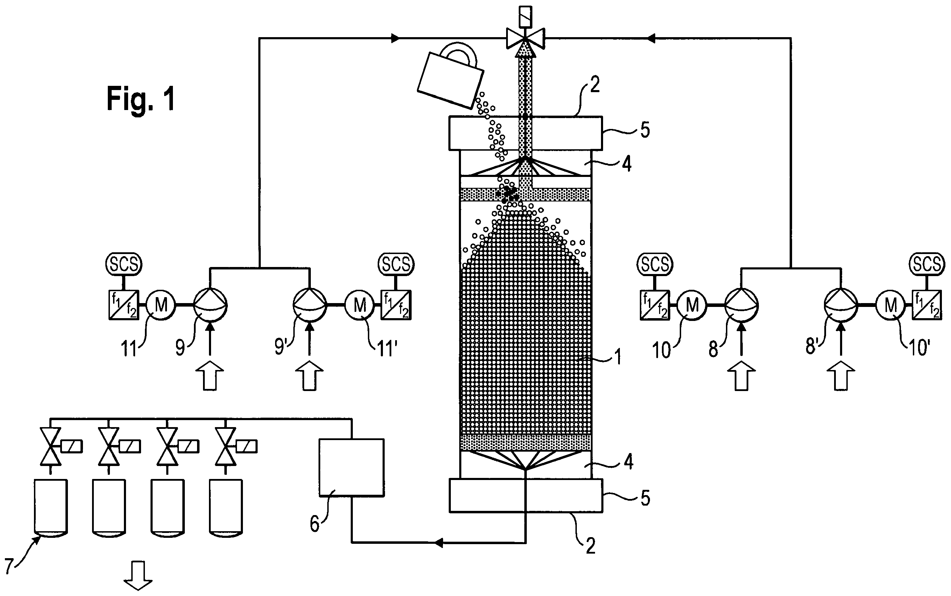

Wie aus Fig. 1 ersichtlich, weist die dargestellte Vorrichtung eine vertikal angeordnete Trennsäule 1 auf, die an ihrem oberen Ende mit einem Deckel 2 sowie einem Verteiler/Sammler 4 versehen ist und an ihrem unteren/oberen Ende einen Sammler/Verteiler 4 sowie einen Boden 5 aufweist.

Wie weiterhin ersichtlich, ist der Sammler 4 mit einem Detektor 6 verbunden, der dem Erkennen der abgetrennten Substanzen dient und mit einem Fraktionensammler 7 verbunden ist, der seinerseits dem Auffangen der abgetrennten Substanzen dient.

Die Trennsäule 1 weist beim dargestellten Ausführungsbeispiel jeweils zwei Membranpumpen 8, 8' für die Produktaufgabe und /oder Eluentenaufgabe sowie zwei Membranpumpen 9, 9' für die Aufgabe des Eluenten (mobile Phase) auf, wobei diese Pumpen 8, 8', 9, 9' über eine gemeinsame Förderleitung zur Aufgabe des jeweiligen Produktes an das obere Ende der Trennsäule 1 angeschlossen sind. Bei anderen Trennaufgaben ist ein Anschluss dieser Pumpen 8, 8', 9, 9' über eine gemeinsame Förderleitung an das untere Ende der Trennsäule 1 vorteilhaft.

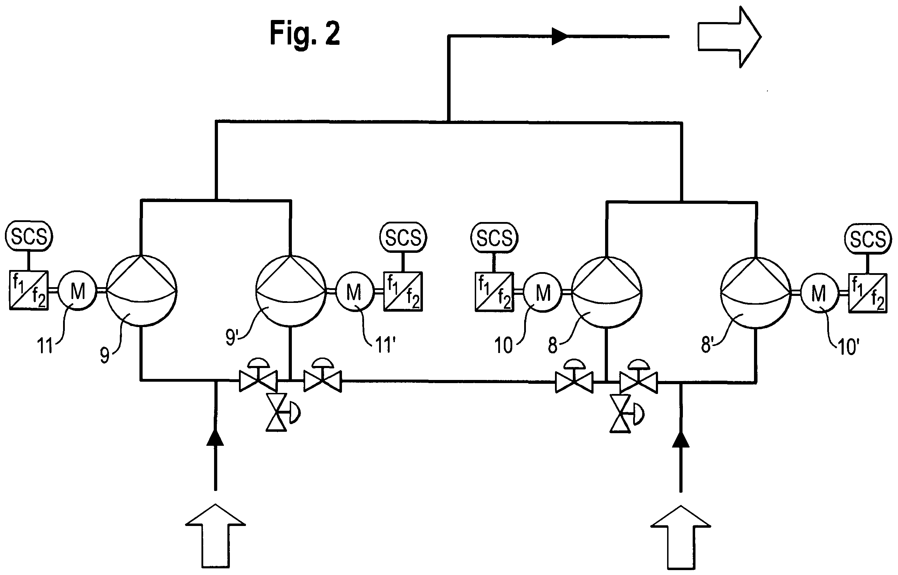

Das in Figur 2 gezeigte Pumpenarrangement ist eine Ausweitung des vorhergehend gezeigten Ausführungsbeispiels mit getrennter Aufgabe der Pumpen 8, 8' und 9, 9'. Auf der Saugseite werden die Fluidleitungen über eine auf der Saugseite der Pumpen dargestellte Ventilkombination verbunden und auf der Druckseite der Pumpe über eine gemeinsam verbundene Leitung zur Trennsäule ausgeführt. Diese Verbindung erlaubt es, die Pumpen 8 und 9' individuell an beide Fluidzufuhren anzuschließen. Der Vorteil besteht in der Erweiterung der Bandbreite der möglichen Durchflußraten. Differenzierte Fahrweisen sind entsprechend der Schaltstellungen der Ventile an der Saugseite der Pumpen 8 und 9' möglich und erlauben kombinierte Volumenströme der Pumpen 8, 8', 9, 9'.

Jede Membranpumpe 8, 8', 9, 9' ist mit einem hochdynamischen Antrieb 10 bzw. 10', 11, 11' versehen, der jeweils eine integrierte programmierbare Steuerung zum Erzielen der gewünschten technischen Eigenschaften, z. B. monoton steigend bzw. Gradientenfahrt, aufweist. Von besonderer Bedeutung ist hierbei, dass jeder Antrieb 10 bzw. 10' 11, 11' ein permanenterregter Drehstrom-Synchron-Servomotor ist, der es aufgrund seiner Konstruktion erlaubt, die gewünschte Eigenschaft bei der Durchführung der Chromatographie zu erreichen.

Fig. 3 zeigt ein Kurvendiagramm, in welchem die Volumenströme von Saug- und Druckhub der Pumpe über der Zeit t aufgetragen sind. Aus diesem Kurvendiagramm ist, wie erwähnt, ersichtlich, dass das optimale Verhältnis für zwei Dosiermembranpumpen die zeitliche Zuordnung der Volumenstromhübe der einzelnen Pumpen zueinander darstellen kann.

Hinsichtlich vorstehend nicht näher erläuterter Merkmale wird im Übrigen ausdrücklich auf die Zeichnungen sowie auf die Patentansprüche verwiesen.

## Patentansprüche

1. Vorrichtung zur Durchführung von Chromatographie, vorzugsweise von Flüssigkeits-Prozesschromatographie, insbesondere auf industriellem Gebiet, unter Verwendung jeweils wenigstens einer mit einem Antrieb versehenen Verdrängerpumpe zur Aufgabe von Produkt sowie Eluent (mobile Phase) in mindestens eine Trennsäule (1),
**dadurch gekennzeichnet, dass** der Antrieb (10, 10', 11, 11') jeder Verdrängerpumpe (8, 8', 9, 9') ein hochdynamischer Antrieb in Form eines permanenterregten, lüfterlosen und damit reinraumgerechten Drehstrom-Synchron-Servomotors ist, der zur Erfassung von Weg-/Zeitdaten mit einem integrierten Gebersystem ausgerüstet ist, die über eine angeschlossene übergeordnete Bewegungssteuerung/-regelung in entsprechende lagegeregelte Fahrbefehle umsetzbar sind.

2. Vorrichtung nach Anspruch 1, **dadurch gekennzeichnet, dass** die Verdrängerpumpe (8, 8', 9, 9') eine oszillierende Verdrängerpumpe, insbesondere eine Membranpumpe, vorzugsweise eine Dosiermembranpumpe, und/oder eine rotierende Verdrängerpumpe ist.

3. Vorrichtung nach einem der vorhergehenden Ansprüche, **dadurch gekennzeichnet, dass** sie jeweils zwei Pumpen (8, 8', 9, 9') mit jeweils einem hochdynamischen Antrieb aufweist, die mit einer zugehörigen Bewegungssteuerung/-regelung derart ausgeführt sind, dass die Pumpen durch elektrische Synchronisation und variabler Winkelgeschwindigkeit in einem optimalen Verhältnis zueinander betreibbar sind.

4. Vorrichtung nach einem der vorhergehenden Ansprüche, **dadurch gekennzeichnet, dass** sie eine pulsationsarme, gleichmäßige Verteilung bei der Aufgabe der Medien mittels der in einem optimalen Verhältnis zueinander betriebenen Verdrängerpumpen (8, 8', 9, 9') auf die Verteilerböden (5), die stationäre Phase schonende, für verbesserte Trennbedingungen insbesondere hinsichtlich der Chromatogrammqualität in der Trennsäule (1) über die an den jeweiligen Trennprozess anpassbare Dosierstromverläufe und damit anpassbaren Fluidkinematiken (Isokratische-, Stufen- oder Gradientenfahrweise) der mobilen Phase durch Verdrängerpumpen und deren präzise Bewegungssteuerung/-regelung über entsprechende lagegeregelte Fahrbefehle ermöglicht.

5. Vorrichtung nach einem der vorhergehenden Ansprüche, **dadurch gekennzeichnet, dass** die Verdrängerpumpen und ihre Antriebe ein vollautomatisches, ohne fehlerbehaftete manuelle Pumpen-Hublängenverstellung dokumentierbares Gesamtsystem darstellen.

## Claims

1. Apparatus for performing chromatography, and preferably liquid chromatography, particularly in the industrial field, using, for feeding product and eluent (mobile phase) respectively into at least one separation column (1), at least one positive-displacement pump provided with a drive in the respective cases, **characterised in that** the drive (10, 10', 11, 11') of each positive-displacement pump (8, 8', 9, 9') is a highly dynamic drive in the form of a three-phase permanent-magnet synchronous servomotor which is fanless and hence fit for clean-room use and which is fitted with an integrated sensor system for sensing travel/time data, which data, by means of a master system for movement control/regulation which is connected on, can be converted into appropriate position-regulated commands for driving.

2. Apparatus according to claim 1, **characterised in that** the positive-displacement pump (8, 8', 9, 9') is a reciprocating positive-displacement pump, and in particular a diaphragm pump and preferably a metering diaphragm pump, and/or a rotary positive-displacement pump.

3. Apparatus according to one of the preceding claims, **characterised in that** it has, in the respective cases, two pumps (8, 8', 9, 9') each having a highly dynamic drive, which are each designed to have an associated movement control/regulation system in such a way that the pumps, by electrical synchronisation and variable angular velocity, can be operated in an optimum relationship to one another.

4. Apparatus according to one of the preceding claims, **characterised in that** it makes possible, even, low-pulsation distribution to the distributing end-caps (5) when the media are being fed in by means of the positive-displacement pumps (8, 8', 9, 9') operated in an optimum relationship to one another, the stationary phase being gently treated, to give separating conditions in the separation column (1) which are particularly improved in respect of the quality of the chromatograms, this being made possible by means of patterns of metered flow which can be matched to the given separating process and fluid kinematics for the mobile phase (for isocratic, stepwise or gradient modes) which can be matched to these patterns, achieved by positive-displacement pumps and exact movement control/regulation thereof by means of appropriate driving commands.

5. Apparatus according to one of the preceding claims, **characterised in that** the positive-displacement pumps and their drives constitute a fully automatic and documentable overall system in which there is no manual adjustment of pump stroke length, with the errors to which this is subject.

## Revendications

1. Dispositif de réalisation d'une chromatographie, de préférence d'une chromatographie d'un processus en phase liquide, en particulier dans le domaine industriel, en utilisant au moins une pompe volumétrique respective pourvue d'un entraînement pour distribuer le produit ainsi que l'éluent (phase mobile) dans au moins une colonne de séparation (1),
**caractérisé en ce que** l'entraînement (10, 10', 11, 11') de chaque pompe de volumétrique (8, 8', 9, 9') est un entraînement hautement dynamique sous la forme d'un servomoteur synchrone triphasé à excitation permanente, dépourvu de ventilateur et donc conforme aux salles blanches, qui, en vue de détecter des données de course/temps, est équipé d'un système émetteur intégré, données qui peuvent être converties en ordres de déplacement correspondants régulés en position via une commande/régulation de mouvement connectée maître.

2. Dispositif selon la revendication 1, **caractérisé en ce que** la pompe volumétrique (8, 8', 9, 9') est une pompe volumétrique oscillante, en particulier une pompe à membrane, de préférence une pompe à membrane de dosage, et/ou une pompe volumétrique rotative.

3. Dispositif selon l'une des revendications précédentes, **caractérisé en ce qu'**il comprend deux pompes respectives (8, 8', 9, 9') pourvues chacune d'un entraînement hautement dynamique, qui sont réalisées avec une commande/régulation de mouvement associée de telle sorte que les pompes peuvent fonctionner dans une relation optimale l'une par rapport à l'autre par une synchronisation électrique et par une vitesse angulaire variable.

4. Dispositif selon l'une des revendications précédentes, **caractérisé en ce qu'**il permet une répartition régulière pauvre en impulsions sur les fonds de distributeur (5) lors de la distribution des fluides au moyen des pompes volumétriques (8, 8', 9, 9') qui fonctionnent dans une relation optimale l'une par rapport à l'autre, des cinématiques fluidiques (mode de fonctionnement isocratique, par étages ou par gradients) de la phase mobile qui ménagent la phase stationnaire et qui sont adaptables à des conditions de séparation améliorées en particulier par rapport à la qualité des chromatogrammes dans la colonne de séparation (1) via les allures de flux de dosage adaptables au processus de séparation respectif, lesdits cinématiques étant donc adaptables, grâce à des pompes volumétriques et à leur commande/régulation de mouvement précise via des ordres de fonctionnement correspondants régulés en position.

5. Dispositif selon l'une des revendications précédentes, **caractérisé en ce que** les pompes volumétriques et leurs entraînements représentent un système d'ensemble entièrement automatique, susceptible d'être documenté, dépourvu de réglage manuel de la longueur de course de la pompe qui serait vulnérable aux erreurs.
